Europäisches Patentamt

European Patent Office

Office européen des brevets

(11) Veröffentlichungsnummer: **0 272 396 B1**

(19)
(12)

# EUROPÄISCHE PATENTSCHRIFT

(45) Veröffentlichungstag der Patentschrift: **04.03.92**

(51) Int. Cl.⁵: **B64C 9/18**

(21) Anmeldenummer: **87114933.2**

(22) Anmeldetag: **13.10.87**

(54) **Einrichtung für aerodynamisch arbeitende Klappen an Flugzeugtragflügeln, insbesondere Spaltklappen.**

(30) Priorität: **20.12.86 DE 3643808**

(43) Veröffentlichungstag der Anmeldung:
**29.06.88 Patentblatt 88/26**

(45) Bekanntmachung des Hinweises auf die
Patenterteilung:
**04.03.92 Patentblatt 92/10**

(84) Benannte Vertragsstaaten:
**ES FR GB IT NL SE**

(56) Entgegenhaltungen:
**DE-C- 672 401**
**GB-A- 517 895**

(73) Patentinhaber: **DORNIER GMBH**
**Postfach 1420**
**W-7990 Friedrichshafen 1(DE)**

(72) Erfinder: **Heynatz, Johann Theodor, Prof. Dr.**
**Spiegelberg 3**
**W-7997 Immenstaad(DE)**
Erfinder: **Zimmer, Herbert, Dr.-Ing.**
**Virchowstrasse 21**
**W-7990 Friedrichshafen 1(DE)**
Erfinder: **Max, Heinz, Dipl.-Ing.**
**Landaustrasse 4**
**W-7990 Friedrichshafen 24(DE)**

(74) Vertreter: **Landsmann, Ralf, Dipl.-Ing.**
**c/o DORNIER GMBH Postfach 1420**
**W-7990 Friedrichshafen 1(DE)**

## Beschreibung

Die Erfindung betrifft eine Einrichtung für aerodynamisch arbeitende Klappen an Flugzeugtragflügeln, insbesondere Spaltklappen, enthaltend Getriebe in Form von Drehgelenkketten für die verstellbare Aufnahme der Klappen an den Tragflügeln und über die Glieder der Getriebe auf die Klappen einwirkende Klappenantriebe.

Es sind Getriebe für Klappensysteme an Flugzeugtragflügeln bekannt, mittels denen dieselben Klappen sowohl zur Hochauftriebserzeugung als auch zur Erzielung einer Bremswirkung benützt werden können (EU-A-O 154 047).

Es sind auch Klappensysteme bekanntgeworden, bei denen die vorgesehenen Klappen sowohl zur Hochauftriebserzeugung als auch zur Erzeugung einer Bremswirkung eingesetzt werden (DRP 672 401).

Bei Klappensystemen der genannten Art, z.B. bei Hinterkantenklappen- bzw. Klappensystemen, erfolgt zur Erzielung von Hochauftrieb ein Schwenken der Klappen zur Änderung der Wölbung des sich aus dem Profil der Tragflügel und dem Profil der Klappen zusammensetzenden Gesamtprofils und in vielen Fällen gleichzeitig eine Verstellung der Klappen in Richtung der Profiltiefe.

Für das Ausfahren der Hinterkantenklappen zur Hochauftriebserzeugung bzw. zur Erzeugung einer Bremswirkung sind Verstellgetriebe bzw. Stellantriebe mit relativ hohem Übersetzungsverhältnis üblich.
Dabei sind die Verstellgetriebe bzw. Stellantriebe so ausgelegt, dass die Klappen die Bremsstellung erst nach Durchlaufen der Hochauftriebsstellungen einschließlich der Verstellbewegung zur Einstellung eines Strömungsspaltes erreichen können.
Es können jedoch auch Notfälle eintreten, bei denen das Ausfahren der Klappen in die Bremsstellung so rasch wie möglich und auf kürzestmöglichem Wege bewirkt werden sollte. Ein typischer Notfall ist beispielsweise die Notwendigkeit eines Startabbruchs mit möglichst kurzer Startabbruchstrecke ("accelerated stop distance"), dies kann z.B. bei Ausfall eines Triebwerks oder anderer Schäden am Flugzeug der Fall sein. In diesen Fällen ist von Nachteil, wenn die Klappen aus der Einfahrstellung am Tragflügel oder aus Hochauftriebsstellungen in die Bremsstellung über Getriebe mit relativ grosser Übersetzung zeitraubend verstellt werden müssen.

Es ist Aufgabe der vorliegenden Erfindung eine Einrichtung zur Aufnahme und Verstellung von zur Erzeugung von Hochauftrieb und zur Widerstandserzeugung dienender Klappen so auszubilden, dass die zur Verstellung der Klappen in die Bremsstellung erforderliche Stellzeit wesentlich verkürzt wird, bei geringstmöglichem gewichtssparendem Aufwand an Bauteilen und einfacher, sicherer Funktion.

Die gestellte Aufgabe ist entsprechend den Merkmalen des Hauptanspruchs und in weiterer vorteilhafter Ausgestaltung des Hauptanspruchs nach den Merkmalen der Unteransprüche gelöst.

Erfindungsgemäss wird infolge der besonderen Ausbildung der Verstellgetriebe in Verbindung mit getrennt betätigbaren Stellantrieben erreicht, dass die Klappen aus jeder Stellung, einschließlich der Einfahrstellung an den Tragflügeln unmittelbar mit geringem Zeitaufwand und auf kürzestem Wege in die Bremsstellung einschwenkbar sind. Die in der Grundform Viergelenkgetriebe darstellenden Drehgelenkketten für die Aufhängung und Verstellung der Klappen an den Tragflügeln lässt durch die besondere Ausbildung der Schwingenglieder in Verbindung mit den an den Drehgelenkketten angreifenden, voneinander unabhängig betätigbaren Stellantrieben getrennte und bzw. oder einander überlagernde Bewegungen der Klappen in Richtung der Profiltiefe bzw. Schwenkstellungen auch mit extremen Ausschlagwinkeln in vorbestimmter Weise zu.

Aus der erfindungsgemässen Ausbildung resultiert auch eine relativ geringe Anzahl erforderlicher Drehgelenkkettenglieder zur Erzielung aller Ausschlagbewegungen der Klappen und ferner die Lage der Gelenkkettenglieder, sowie der Stelltriebe zur Betätigung der Klappen innerhalb oder zumindest zum grössten Teil innerhalb der Kontur des sich aus den Tragflügeln und den Klappen zusammensetzenden Tragflügelprofils.

In der Zeichnung sind zwei Ausführungsbeispiele gemäß der Erfindung dargestellt und in der nachfolgenden Beispielsbeschreibung näher erläutert.

Es zeigen:

| | |
|---|---|
| Figur 1 | im Längsschnitt den hinteren Abschnitt eines Tragflügels mit Hochauftriebsklappe, Verstellgetriebe und Stellantrieben, schematisiert dargestellt, |
| Figur 2 bis 6 | der Figur 1 entsprechende Querschnitte mit in unterschiedlichen Stellungen befindlichen Hochauftriebsklappen, |
| Figur 7 | als weitrees Ausführungsbeispiel den hinteren Abschnitt eines Flugzeugtragflügels mit Hochauftriebsklappe, Verstellgetriebe und Stellantrieben im Längsschnitt, schematisiert dargestellt und |
| Figur 8 bis 10 | die Ausführung gemäß Figur 7 mit in unterschiedlichen Ausfahrstellungen befindlicher Hochauftriebsklappe. |

Für beide Ausführungsbeispiele sind im nachfolgenden die gleichen Bezugsziffern eingesetzt.

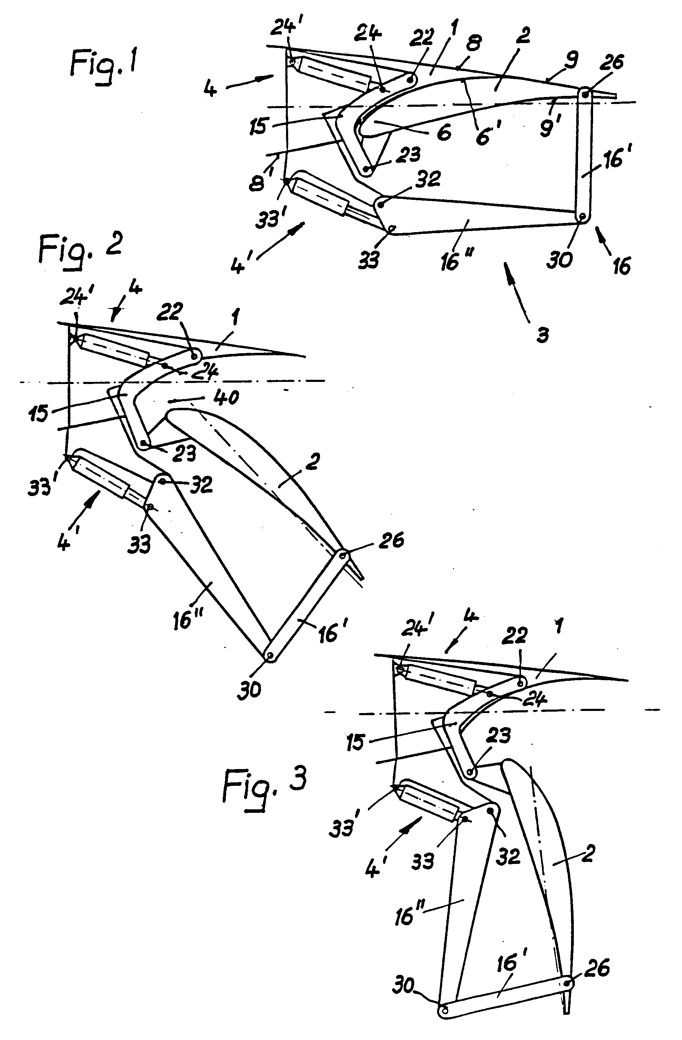

Bei dem gezeigten Ausführungsbeispiel gemäß Figur 1 bis 6 sind mit 1 der hintere Abschnitt eines Flugzeugtragflügels, mit 2 die jedem der beiden Tragflügel zu beiden Seiten des Flugzeugrumpfes zugeordneten Hochauftriebsklappen, mit 3 die die Klappen 2 verstellbar aufnehmenden und sich an den Tragflügeln 1 abstützenden Verstellgetriebe und mit 4 bzw. 4' die sich an den Tragflügeln 1 abstützenden und an den Verstellgetrieben 3 angreifenden Stellantriebe bezeichnet.

Nachfolgend ist in der Beschreibung nur auf die in der Schnittebene liegende Hochauftriebsklappe bzw. eines an der Klappe angreifenden Hebelverstellgetriebes und auf eines der Paare von Stellantrieben Bezug genommen.

In Figur 1 befindet sich die Hochauftriebsklappe 1 in Einfahrstellung für den Reise- bzw. Marschflug. Dabei liegt die Profilnase 6 der Klappe 2 in einer entsprechend geformten Ausnehmung 6' am hinteren Abschnitt des Tragflügels 1. Die obere Beplankung 8 des Tragflügels 1 geht spaltfrei in die obere Beplankung 9 der Klappe 2 über. Das gleiche trifft auf die untere Beplankung 8' des Tragflügels 1 bzw. die untere Beplankung 9' der Klappe 2 zu.

Insgesamt weisen die Tragflügel 1 im Zusammenwirken mit den Hochauftriebsklappen 2 eine für den Marsch- bzw. Reiseflug günstige, luftwiderstandsarme Wölbungsstellung auf.

Die Verstellgetriebe 3 zur Verstellung der Hochauftriebsklappe 2 in der Ausführung gemäß der Figuren 1 bis 6 der Zeichnung bildet eine kinematische Kette in der Art eines Gelenkvierecks. Dabei ist mit 15 die Kurbel und mit 16 die Schwinge Verstellgetriebes bezeichnet. Die Koppel der kinematischen Kette wird hierbei durch die über das Verstellgetriebe 3 zur verstellende Hochauftriebsklappe 2 gebildet.

Der Kurbelhebel 15 greift mit seinem einen Ende über ein Gelenk 22 schwenkbar am Tragflügel 1 und mit seinem anderen Ende über ein Gelenk 23 der Hochauftriebsklappe 2 im Bereich deren Profilnase 6 an.

Zwischen den beiden Gelenken 22 bzw. 23 ist am Kurbelhebel 15 eine Anlenkung 24 gebildet. Der Stellmotor 4 stützt sich über eine Anlenkung 24' am Tragflügel 1 und über die Anlenkung 24 an der Kurbel 15 zwischen den beiden Gelenken 22 bzw. 23 ab.

Die Getriebekoppel, das heißt die Hochauftriebsklappe 2 ist durch eine weiteres Gelenk 26, das in einem Abstand von der Anlenkung 23 in Richtung der Klappentiefe an der Klappe 2 vorgesehen ist, an das eine Ende einer Schwinge 16 angeschlossen. Die Schwinge 16 besteht hierbei aus zwei aneinander über ein Gelenk 30 angeschlossene Teilschwingen 16' bzw. 16", wobei die Teilschwinge 16' über das Gelenk 26 an der Hochauftriebsklappe 2 angreift.

Die Teilschwinge 16" ist über ein weiteres Gelenk 32 am Tragflügel 1 schwenkbar aufgenommen. Ferner greift an der Teilschwinge 16" mittels einer in einem Abstand vom Gelenk 32 vorgesehene Anlenkung 33 der Stellantrieb 4' an. Der Stellantrieb 4' stützt sich seinerseits am Tragflügel 1 mittels einer Anlenkung 33' gelenkig ab.

Bei dem gezeigten Ausführungsbeispiel gemäß der Figuren 1 bis 6 sind für die Aufnahme der Gelenke 32 für die Anlenkung der Teilschwingen 16" bzw. 16' der Getriebe 3 Tragarme an den Tragflügeln 1 vorgesehen, die unterhalb der Tragflügel bzw. der Hochauftriebsklappen 2 liegen und über die durch die Beplankung 8' bzw. 9' gebildete Tragflügelkontur hinausragen.

Die Kurbelhebel 15 sind hierbei in der Art eines Winkelhebels gekrümmt geformt. Aufgrund dieser Ausbildung können die Hebel 15 in Einfahrstellung der Klappen 2 eine die Kontur des Nasenabschnittes 6 der Klappen 2 eng umschließende Lage einnehmen.

Ferner sind für die Aufnahme der als Winkelhebel ausgebildeten Kurbel 15 des Verstellgetriebes 3 sich in Richtung der Profiltiefe des Tragflügels 1 erstreckende Ausnehmungen gebildet. Ebenso ist der an der Kurbel 15 angreifende Stellantrieb 4 in einer entsprechenden Ausnehmung untergebracht.

Es ist bei der gezeigten Ausführungsform auch ohne weiteres eine Ausbildung denkbar, bei der Drehgelenkglieder je eines Verstellgetriebes zu beiden Seiten der Klappen z.B. in entsprechenden Ausnehmungen aber auch in Ausnehmungen, die durch Längseinschnitte im Abstand von den Stirnflächen der Klappen vorgesehen sind.

Die Ausbildung der Hebelverstellgetriebe 3 gemäß der Ausführung nach den Figuren 1 bis 6 ist geeignet, als Nachrüstsatz an bereits vorhandenen Tragflügel im Austausch gegen bisherige Klappenanordnungen, verwendet zu werden.

Die Schwingen des Verstellgetriebes 3 können auch durch einen längenveränderlichen Stellantrieb z.B. einen hydraulisch wirkenden und durch eine Druckmittelsteuerung betätigbaren Stellmotor üblicher Bauart gebildet sein. Das eine Element des Stellmotors stützt sich dabei über das Gelenk 32 am Tragflügel 1 ab und das zweite Element greift gelenkig am hinteren Gelenk 26 der Klappen 2 an.

Die Wirkungsweise der Klappenanordnung in Verbindung mit den Hebelverstellgetrieben ist wie nachfolgend beschrieben.

Aus der in Figur 1 gezeigten Einfahrstellung der Hochauftriebsklappen 2 sind Verstellungen der Klappen in zwei voneinander unabhängigen Verstellfolgen möglich.

Die eine der Verstellfolgen erlaubt das Ausfahren der Hochauftriebsklappen 2 aus der Einfahrstellung unter Umgehung der Ausfahrbewegung der Klappen 2 in Richtung der Tragflügeltiefe (Fowler-Bewegung) unmittelbar in die Bremsstellung gemäß Figur 2 bzw. Figur 3.

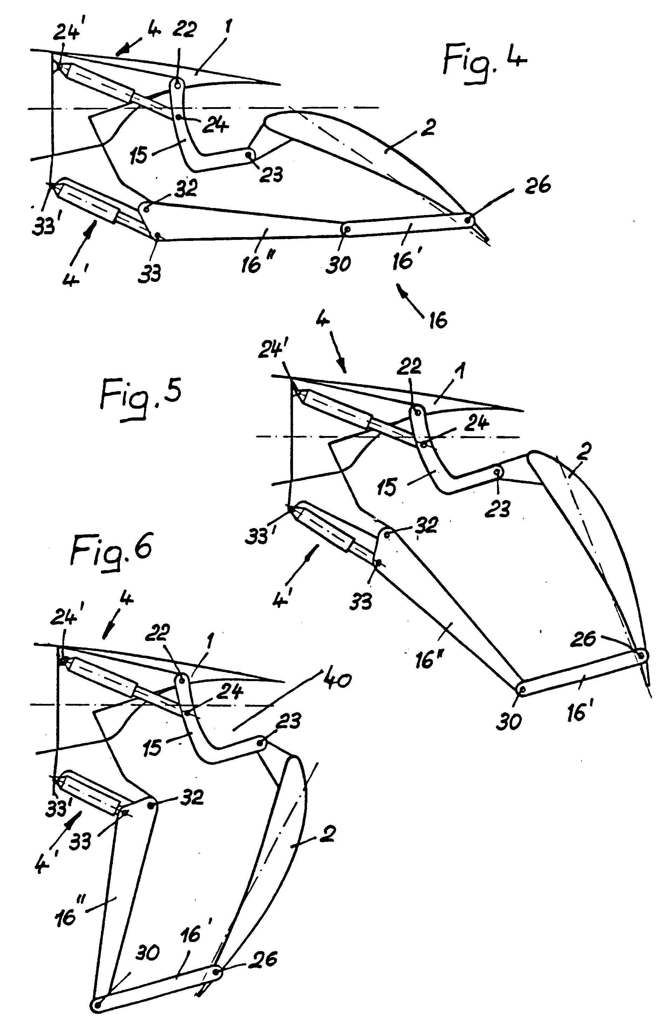

Die zweite Verstellfolge ermöglicht das Ausfahren der Hochauftriebsklappen 2 aus der Einfahrstellung gemäß Figur 1 in Zwischenstellungen, wobei die Hochauftriebsklappen 2 eine Bewegung in Richtung der Profiltiefe der Tragflügel 1 und wahlweise um das Nasengelenk 23 in Hochauftriebsstellungen, z.B. gemäß Figur 4, mit abwärtsgerichteter Klappenhinterkante ausführen. Aus jeder der Zwischenstellungen heraus sind die Klappen 2 in die Klappenbremsstellung gemäß Figur 6 einschwenkbar. Die Zwischenstellungen der Hochauftriebsklappen schließen auch eine Steilanflugstellung gemäß Figur 5 der Zeichnung ein.

Figur 6 zeigt die maximal mögliche Ausschlagstellung der Hochauftriebsklappen 2 zur Erzielung einer Bremswirkung. Dabei weisen die Hinterkanten der Hochauftriebsklappen 2 um einen gewissen Winkelbetrag aus der Vertikalen gegen die Anströmung, das heisst, dass die Klappen 2 von der Klappenhinterkante her angeströmt werden, wobei zwischen der Klappennase 6 und der Hinterkante der Tragflügel 1 ein Strömungsspalt 40 gebildet ist, über den die vor der Klappe aufgestaute Strömung in die Strömung über den Tragflügel einzuströmen vermag, mit der Wirkung einer den Auftrieb zerstörenden Spoilerwirkung.

Zur Erzielung der Verstellung der Hochauftriebsklappen 2 aus ihrer Einfahrstellung an den Tragflügeln 1 gemäß Figur 1 werden die Stellantriebe 4 über eine hier nicht dargestellte Druckmittelsteuereinrichtung betätigt so, daß die Kurbeln 15 der Getriebe 3 die Hochauftriebsklappen 2 in Richtung der Profiltiefe nach hinten zur Bildung des Strömungsspaltes 40 verstellen.
Unabhängig von der Betätigung der Stellantriebe 4 kann über die Stellantriebe 4' und über die an diese angeschlossenen Teilschwingen 16'' bzw. 16' mit ihrem Gelenk 26 den Hochauftriebsklappen 2 eine Schwenkbewegung um das Gelenk 23 erteilt werden, so daß eine Änderung der Profilwölbung des sich aus den Tragflügeln und den Klappen 2 zusammensetzenden Tragflügelprofils bewirkt wird.

Aus jeder der Ausfahrstellungen der Hochauftriebsklappen 2 ist eine Verstellung der Klappen 2 in die Bremsstellung gemäß Figur 3 vorgesehen. Die Verstellung in die Bremsstellung wird bewirkt durch die Betätigung der Stellantriebe 4' mittels Schwenkung der Teilschwingen 16'' um das Gelenk 32 an den Tragflügeln 1 und entsprechende Verstellung der Teilschwingen 16' über das Gelenk 30 und die Anlenkung der Teilschwingen 16' mittels des Gelenks 26 im Bereich der Hinterkante der Hochauftriebsklappen 2.

Bei der Verstellbewegung der Hochauftriebsklappen 2 aus den Zwischenstellungen gemäß Figur 2 in die Bremsstellung ist eine Betätigung der Stellantriebe 4 nicht zwingend, jedoch auch nicht ausgeschlossen.
In Einfahrstellung ist zwischen dem hinteren Bereich der Tragflügel 1 und den Hochauftriebsklappen kein Strömungsspalt vorhanden.

Bei der Ausfahrfolge mit Ausfahrbewegung der Hochauftriebsklappen 2 in Richtung der Profiltiefe nach hinten und wahlweisem Ausschlag der Klappen 2 in eine Hochauftriebsstellung werden die Stellantriebe 4 betätigt und die Klappen 2 mittels der Kurbeln 15 bzw. der Schwingen 16 geschwenkt. Dabei bewegen sich die Teilschwingen 16'' bzw. 16' aus einer Winkelstellung zueinander in eine mehr oder weniger ausgestreckte Stellung, so daß über die Anlenkungen 26 die Klappen 2 in Zwischenstellungen zur Erzeugung von Hochauftrieb verstellt werden. Durch gleichzeitiges Betätigen der Stellantriebe 4' sind die Hochauftriebsklappen 2 parallel in Richtung der Profiltiefe verstellbar.

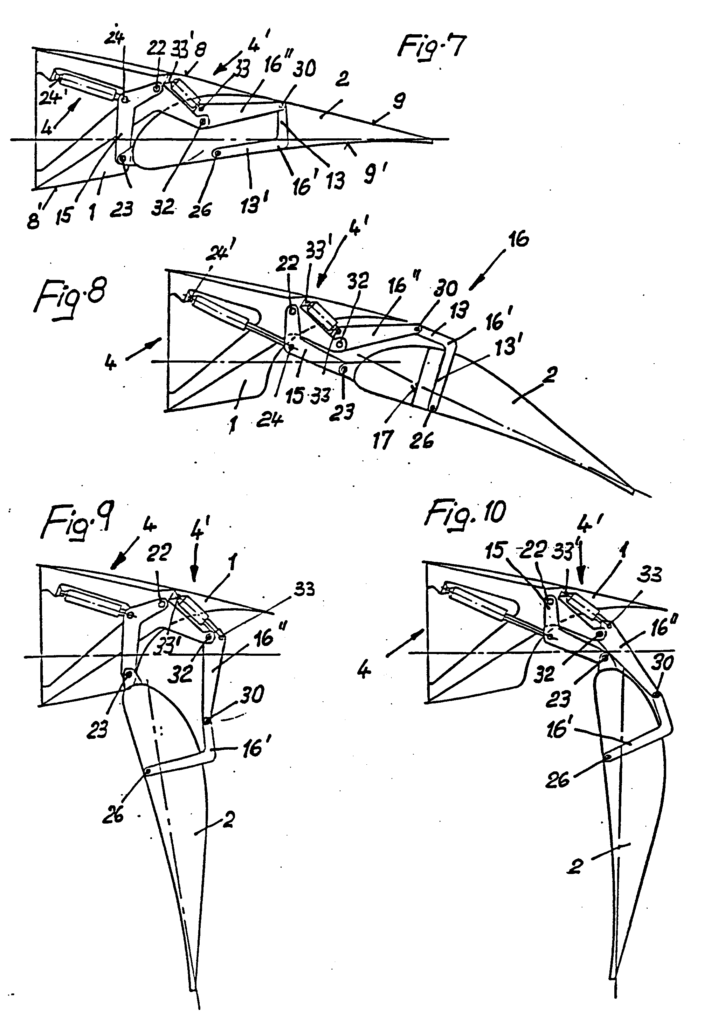

Bei dem in den Figuren 7 bis 10 gezeigten Ausführungsbeispiel einer Einrichtung zur Lagerung und Verstellung von Klappen an der Hinterkante der Tragflügel 1 sind die Glieder des Verstellgetriebes so angeordnet bzw. geformt ausgebildet, dass in Klappeneinfahrstellung (Figur 7) sämtliche Glieder des Verstellgetriebes innerhalb der durch die Beplankung 8, 9 bzw. 8', 9' der Tragflügel 1 bzw. der Klappen 1 gebildeten Tragflügelkontur liegen und damit im Marschflug von der Strömung um die Tragflügel nicht beaufschlagt werden.
Ausserdem liegen auch die beiden Stellantriebe 4, 4' jeder der Stelleinheiten innerhalb der Aussenkontur der Tragflügel.

Das Verstellgetriebe ist auch hier in seinem Grundaufbau ein bekanntes Vier-Gelenkgetriebe, bei dem die Klappe 2 das Koppelglied bildet.
Die Schwinge 16 des Getriebes ist hier ebsenso wie bei den Ausführungen gemäss Figuren 1 bis 6 in Teilschwingen 16' bzw. 16'' unterteilt. Dabei sind die Klappen 2, bezogen auf die Einfahrstellung, über die Gelenke 22, 32 bzw. 23, 26 der Kurbeln 15 bzw. der Schwingen 16 in hängender Anordnung schwenkbar. Die Kurbelhebel 15 sind mit dem Stellantrieb 4 und die Schwingen 16 mit dem Stellantrieb 4' jeder der Stelleinheiten gelenkig verbunden.

Im Gegensatz zur Ausbildung nach Figur 1 bis 6 ist hier die Teilschwinge 16' des Verstellgetriebes für die Lagerung und Führung der Hochauftriebsklappen 2 innerhalb der Klappenkontur 9, 9' angeordnet und um das Gelenk 32 am Tragflügel 1 schwenkbar. Im Abstand vom Gelenk 32 greift an der Teilschwinge 16'' das verstellbare Glied des Stellantriebes 4' an, wobei sich der Stellantrieb 4' andererseits am Tragflügel 1 abstützt.

Die über das Gelenk 30 an der Teilschwinge 16″ gelenkig angreifende Teilschwinge 16′ weist dabei die Form eines Winkelhebels auf, dessen einer Arm 13 sich vom Gelenk 26 im Bereich der Profilunterseite 9′ der Klappen 2 etwa vertikal zur Klappenoberseite 9 erstreckt. In Klappeneinfahrstellung liegt der zweite Hebelarm 13′ der Teilschwinge 16′ etwa parallel zur unteren Beplankung 9′ der Klappen 2 stirnseitig in Ausnehmungen an den Tragflügen und bzw. oder den Klappen 2.
Der Hebelarm 13 umgreift sowohl in Einfahrstellung als auch in jeder anderen Ausfahrstellung der Klappen 2 deren Holmkasten 17 (Fig. 7,8).

Die Wirkungsweise der beschriebenen Ausführrung ist wie folgt:
Die getrennt, das heisst unabhängig voneinander betätigbaren Stellantriebe 4 bzw. 4′ einer Stelleinheit und die Kurbeln 15 bzw. Schwingen 16 lassen je nach Betätigung der Stellantriebe 4 bzw. 4′ zwei unterschiedliche Verstellbewegungen der Klappen 2 zu.

Die eine der Verstellbewegungen wird erzielt durch Betätigung der Stellantriebe 4 über die Kurbelhebel 15 bzw. die Teilschwingen 16′ durch Schwenkung um die Gelenke 22 bzw. 30 und die Anlenkungen 23 bzw. 26 an den Klappen 2 in Richtung der Profiltiefe der Klappen bzw. der Tragflügel 1. Die Teilschwingen 16″ behalten dabei ihre Lage infolge der nichtbetätigten Stellantriebe 4′ bei. Der beschriebenen Verstellbewegung der Klappen 2 wird durch entsprechende Ausbildung der Schwingen 16 gleichzeitig zur Ausfahrbewegung nach hinten eine Verstellbewegung auf einer Kreisbahn um die Gelenkpunkte 23 im Bereich der Klappennase 6 überlagert.

Damit sind aus der Einfahrstellung der Klappen heraus Hochauftriebsstellungen einstellbar mit entsprechender Bildung des Strömungsspaltes 40 mit Überleitung der Strömung von der Profilunterseite zur Profiloberseite 8 bzw. 9 der Tragflügel bzw. der Klappen 2.
Die Aufteilung der Schwingen 16 in Teilschwingen 16′ bzw. 16″ erlaubt bei unbetätigten Stellantrieben 4′ in Verbindung mit den Gelenken 23 an der Klappennase eine Zwangsführung der zweiten Anlenkung 26 der Klappen 2 etwa parallel zu den Anlenkungen 23 an den Kurbeln 15.

Durch Betätigung der Stellantriebe 4′ bei unbetätigten Stellantrieben 4 wird eine Schwenkung der Klappen 2 um die Gelenke 32 am Tragflügel 1 in die Bremsstellung bewirkt. Das Einschwenken der Klappen 2 in die Bremsstellung kann dabei aus jeder der Hochauftriebsstellungen (siehe Figur 8) oder aus der Steilanflugstellung z.B. gemäss Figur 5 erfolgen.
Bei der aus Figur 6 erkennbaren Bremsstellung nehmen die Klappen 2 eine Lage ein, in der die Klappen 2 über die Hinterkante angeströmt werden und die Strömung durch den Strömungsspalt 40 so zur Oberseite 8 bzw. 9 der Tragflügel 1 bzw. der Klappen gelangt, so dass die Umströmung der Tragflügel 1 gestört und Auftrieb in einer Art Spoilerwirkung zerstört wird.

Die Betätigung beider Stellantriebe 4 bzw. 4′ einer Einheit bewirkt, dass die Klappen 2 aus ihrer Einfahrstellung z.B. gemäss Figur 1 bzw. Figur 7 unmittelbar unter Umgehung der Hochauftriebsstellungen in die Bremsstellung verstellt werden und dass gleichzeitig die Bildung des Strömungsspaltes 40 bewirkt wird.
Bei Notfällen kann es jedoch auch von Vorteil sein, wenn zur Abkürzung des Zeitraumes für das Ausfahren der Klappen 2 aus der Einfahrstellung an den Tragflügen 1 in die Bremsstellung nur die Stellantriebe 4 betätigt werden. Dabei wird in Kauf genommen, dass der Strömungsspalt 40 einen geringeren Durchtrittsquerschnitt zwischen den Tragflügeln und den Klappennasen 6 der Klappen 2 aufweist.

**Patentansprüche**

1. Einrichtung für aerodynamisch arbeitende Klappen an Flugzeugtragflügeln, insbesondere Spaltklappen, enthaltend Getriebe in Form von Drehgelenkketten für die verstellbare Aufnahme der Klappen an den Tragflügeln und über die Glieder der Getriebe auf die Klappen einwirkende Klappenantriebe, **dadurch gekennzeichnet,** daß

   - jedes der an die Klappen (2) angeschlossenen Verstellgetriebe

   - eine mittels eines Gelenks (22) am Tragflügel (1) abgestützte und über ein zweites Gelenk (23) im Bereich der Profilnase (6) der Klappen (2) angelenkte Kurbel (15) besitzt und - in einem Abstand vom vorderen Gelenk (23) in Richtung der Klappentiefe (im Bereich der Klappenhinterkante) an der Klappe (2) mittels eines weiteren Gelenks (26) angreifende Schwingen (16, 16', 16'') aufweist, die sich am Tragflügel (1) über ein Gelenk (32) abstützen und durch Einstellmittel in Bezug auf ihre Länge verstellbar sind und daß

   - sich am Tragflügel (1) abstützende und an den Klappen (2) über die Verstellgetriebe in einem Abstand in Richtung der Klappentiefe voneinander angreifende, unabhängig voneinander je einzeln oder gemeinsam betätigbare Klappenstellantriebe (4 bzw. 4') vorgesehen sind.

**2.** Einrichtung nach Anspruch 1, dadurch gekennzeichnet, dass die Schwinge (16) der Verstellgetriebe gebildet ist aus zwei über ein Gelenk (30) aneinander angeschlossenen Teilschwingen (16′ bzw. 16″), die wahlweise zur Änderung ihrer gemeinsamen Längserstreckung zueinander schwenkbar sind.

**3.** Einrichtung nach Anspruch 1 oder 2, dadurch gekennzeichnet, dass der eine (4′) der Stellantriebe (4, 4′) an den Gliedern (16″, 16′) der Schwinge (16) bzw. am hinteren Anlenkpunkt (26) der Klappen angreift.

**4.** Einrichtung nach Anspruch 1, dadurch gekennzeichnet, das die längenveränderliche Schwinge (16; 16′, 16″) durch die Glieder eines Stellantriebs gebildet ist, wobei sich das eine der Glieder mittels einem Gelenk (32) am Tragflügel (1) abstützt und das andere Glied üben ein Gelenk (26) im hinteren Bereich der Klappen (2) angreift.

**5.** Einrichtung nach Anspruch 1 bis 4, dadurch gekennzeichnet, dass die Kurbel- bzw. Schwingenglieder (15 bzw. 16, 16′, 16″) in Klappeneinfahrstellung zumindest zum grössten Teil innerhalb der Kontur (8, 9; 8′, 9′) der Tragflügel (1) bzw. der Klappen (2) liegen.

**6.** Einrichtung nach Anspruch 1 bis 5, dadurch gekennzeichnet, dass die Kurbel (15) in Ausnehmungen an den Tragflügeln (1) angeordnet und zumindest teilweise der Form der Nase (6) der Klappen (2) entsprechend gekrümmt ausgebildet ist.

**7.** Einrichtung nach Anspruch 1 bis 6, dadurch gekennzeichnet, dass die an den Klappen (2) angreifende Teilschwinge (16′; Figuren 7 bis 10) als Winkelhebel ausgebildet ist, deren an den Klappen (2) angreifender Arm in Klappeneinfahrstellung etwa längs der Klappenunterseite 9′ innerhalb der Aussenkontur (9) der Klappen (2) liegt und deren am Tragflügel (1) angreifender Arm (13) in Ausfahrstellung den Nasenkasten bzw. Nasenholm (17) umgreift.

**8.** Einrichtung nach Anspruch 1 bis 7, dadurch gekennzeichnet, dass die Teilschwingen (16′, 16″) und die Gelenke (23, 26, 30, 32) zumindest teilweise in Ausnehmungen innerhalb bzw. seitlich der Klappen (2) angeordnet sind.

## Claims

**1.** System for aerodynamically working flaps of aircraft wings, in particular slotted flaps, containing a mechanism in the form of linkages of rotary joints for adjustably receiving the flaps on the aircraft wings and flap drives which act upon the flaps via the members of the mechanism, characterised in that

- each of the adjusting mechanisms connected to the flaps (2)

  comprises a crank (15) which is supported on the aircraft wing (1) by means of a joint (22) and is pivoted via a second joint (23) in the region of the profile nose (6) of the flaps (2); and

  comprises rockers (16, 16', 16'') which engage the flap (2) at a distance from the front joint (23) in the direction of the flap depth (in the area of the rear edge of the flap) by means of a further joint (26), the rockers (16, 16', 16'') being supported on the aircraft wing (1) via a joint (32) and being adjustable with respect to their lengths by adjusting means; and in that

- flap adjusting drives (4 or 4') are provided which are supported on the aircraft wing (1), engage at a distance from one another in the direction of the flap depth via the adjusting mechanism and can be actuated independently from one another individually or together in each case.

**2.** Device according to claim 1, characterised in that the rocker (16) of the adjusting mechanism is formed of two partial rockers (16', 16'') which are connected to one another via a joint (30) and can be pivoted optionally with respect to one another in order to alter their common longitudinal extension.

**3.** Device according to claim 1 or 2, characterised in that one (4') of the adjusting drives (4, 4') engages upon the members (16'', 16') of the rocker (16) or at the rear linking point (26) of the flaps.

**4.** Device according to claim 1, characterised in that the rocker (16, 16', 16''), the length of which can be adjusted, is formed by the members of an adjusting drive, wherein one of the members is supported on the aircraft wing (1) by means of a joint (32) and the other member engages the rear area of the flaps (2) via a joint (26).

**5.** Device according to claims 1 to 4, characterised in that at least the largest part of the crank or rocker members (15 or 16, 16', 16'') lies within the contour (8, 9, 8', 9') of the aircraft wings (1) or flaps (2) in the retracted position of the flaps.

6. Device according to claims 1 to 5, characterised in that the crank (15) is disposed in recesses of the aircraft wings (1) and that at least part of it is formed in a curved manner corresponding to the shape of the nose (6) of the flaps (2).

7. Device according to claims 1 to 6, characterised in that the partial rocker (16'; Figs. 7 to 10) which acts upon the flaps (2) is formed as angular lever, of which the arm which acts upon the flaps (2) lies, in the retracted position of the flaps, approximately along the bottom side (9') of the flap within the outer contour (9) of the flaps (2) and of which the arm (13) which acts upon the aircraft wing (1) emcompasses, in the extended position, the nose box or nose spar (17).

8. Device according to claims 1 to 7, characterised in that the partial rockers (16', 16'') and the joints (23, 26, 30, 32) are disposed at least partially in recesses within or on the side of the flaps (2).

**Revendications**

1. Installation de volets aérodynamiques pour ailes d'avion, en particulier volets à fente, comprenant un mécanisme sous forme de chaînes à articulations tournantes pour la fixation réglable des volets sur les ailes, et des systèmes d'entraînement de volets agissant sur les volets par l'intermédiaire des éléments des systèmes d'entraînement,
**caractérisée en ce** que chacun des mécanismes de réglage couplés avec les volets (2)
- comprend une manivelle (15) qui prend appui sur l'aile (1) au moyen d'une articulation (22) et est articulée dans la région du bec profilé (6) des volets (2) par l'intermédiaire d'une seconde articulation (23), et
- présente, à distance de l'articulation antérieure (23), en direction de la profondeur du volet (dans la région du bord de fuite du volet) des bielles oscillantes (16, 16', 16'') qui agissent sur le volet (2) au moyen d'une articulation supplémentaire (26), s'appuient sur l'aile (1) par l'intermédiaire d'une articulation (32) et dont la longueur peut être ajustée par des moyens de réglage, et
- qu'il est prévu des mécanismes de commande de volets (4 et respectivement 4') pouvant être actionnés, indépendamment l'un de l'autre, individuellement ou en commun, qui prennent appui sur l'aile (1) et agissent sur les volets (2), à une distance l'un de l'autre dans le sens de la profondeur des volets, par l'intermédiaire des mécanismes de réglage.

2. Installation selon la revendication 1, caractérisée en ce que la bielle oscillante (16) des mécanismes de réglage est constituée par deux bielles oscillantes partielles (16' et respectivement 16'') qui sont couplées l'une avec l'autre par l'intermédiaire d'une articulation (30) et peuvent être pivotées l'une par rapport à l'autre pour modifier leur extension longitudinale commune.

3. Installation selon l'une des revendications 1 ou 2 caractérisée en ce que l'un (4') des mécanismes de commande de volets (4, 4') agit sur les éléments (16'', 16') de la bielle oscillante (16) et respectivement au point d'articulation postérieur (26) des volets.

4. Installation selon la revendication 1, caractérisée en ce que la bielle oscillante (16; 16', 16'') à longueur variable est constituée par les éléments d'un des mécanismes de commande, l'un des éléments prenant appui sur l'aile (1) au moyen d'une articulation (32) et l'autre élément étant rattaché à la section postérieure des volets (2) par l'intermédiaire d'une articulation (26).

5. Installation selon l'une des revendications 1 à 4, caractérisée en ce que, dans la position de rentrée des volets, les éléments de manivelle et respectivement de bielle oscillante (15 et respectivement 16, 16', 16'') se situent au moins en majeure partie à l'intérieur du contour (8, 9; 8', 9') des ailes (1) et respectivement des volets (2).

6. Installation selon l'une des revendications 1 à 5, caractérisée en ce que la manivelle (15) est disposée dans des évidements prévus dans les ailes (1) et qu'elle présente une forme curviligne qui correspond au moins partiellement à la forme du bec (6) des volets (2).

7. Installation selon l'une des revendications 1 à 6, caractérisée en ce que la bielle oscillante partielle (16'; fig. 7 à 10) agissant sur les volets (2) est conformée en levier coudé dont le bras agissant sur les volets (2) s'étend, dans la position rentrée des volets, sensiblement le long de l'intrados de volet (9'), à l'intérieur du contour extérieur (9) des volets (2), et dont le bras (13) monté sur l'aile (1) enveloppe, en position sortie, le bec fixe et respectivement le longeron de bec (17).

8. Installation selon l'une des revendications 1 à 7, caractérisée en ce que les bielles oscillantes partielles (16', 16") et les articulations (23, 26, 30, 32) sont disposées au moins partiellement dans des évidements à l'intérieur ou à côté des volets (2).

Fig.1

Fig. 2

Fig. 3

Fig. 4

Fig. 5

Fig. 6

Fig·7

Fig·8

Fig·9

Fig·10